# EUROPEAN PATENT SPECIFICATION

(11) **EP 3 278 000 B1**
(45) Date of publication and mention of the grant of the patent: **30.10.2019**
(21) Application number: 15714461.9
(22) Date of filing: 31.03.2015
(51) Int. Cl.: F16L 57/00, F16L 1/06, F16L 5/02, F16L 51/02, F16L 51/03, F16L 59/21

(54) **A HOUSING FOR A PIPELINE COMPENSATOR AND METHOD FOR MANUFACTURING THE SAME**
GEHÄUSE FÜR EINEN ROHRLEITUNGSKOMPENSATOR UND VERFAHREN ZUR HERSTELLUNG DESSELBEN
BOÎTIER POUR COMPENSATEUR DE CANALISATION ET SON PROCÉDÉ DE FABRICATION

(43) Date of publication of application: 07.02.2018
(73) Proprietor: Creon, 1785 Merchtem (BE)
(72) Inventor: EECHAUTE, Sabine, 1785 Merchtem (BE)
(74) Representative: Gevers Patents
(86) International application number: PCT/EP2015/056988
(87) International publication number: WO 2016/155788

(56) References cited:
- GB-A- 1 492 135
- US-A- 2 732 227
- US-A- 4 058 328
- US-A- 5 548 934
- US-A1- 2012 096 673
- US-A1- 2015 014 943
- US-B1- 6 255 597

## Description

### Technical field

The present invention relates to a pipeline system comprising one or more pipeline compensators for flexibly connecting pipes of the pipeline system. More specifically, the present invention relates to a protective housing for pipeline compensators.

### Background art

A pipeline compensator, also known as expansion joint, usually comprises a tube shaped flexible part or bellows which is at both of its ends provided with a pipe connecting element, such as for example a flange, a hose clamp, etc. The pipe connecting elements are used for connecting the pipeline compensator with pipes at both ends. The flexible part provides the pipeline compensator with the flexibility required to follow the movements of the connecting pipes with respect to each other, which movements may for example be caused by thermal expansion, vibrations, etc. In this way the pipeline compensator compensates for the movements of the connecting pipes, and prevents the connection which it forms between the pipes from being broken. The flexible part of a pipeline compensator is usually a metal bellows, a rubber bellows, a PTFE bellows or a fabric bellows.

The disadvantage of such type of pipeline compensator is that it is not very suitable for underground use. The reason for this is that it is not possible for the flexible part of the pipeline compensator to fully perform its function while it is covered by soil material which impedes the movements of the flexible part and thus also of the pipeline compensator.

For this reason pipeline compensators are used which are provided with a protective housing in the form of a tube shaped sleeve, such as for example shown in CH557501A, GB1401998A, WO8201759A1, GB1531792A, CN102359683A, FR2410205A1 and CN102705613A. Another protective housing is disclosed in US4058328. The sleeve prevents the covering soil material from contacting and pressing against the flexible part such that the flexible part is able to perform its function. In such a type of pipeline compensator, a first end of the pipeline compensator is fixed with respect to the housing near a first opening of the sleeve. A second end of the pipeline compensator is allowed to move within the sleeve such that a pipe connecting to the second end of the pipeline compensator can move through a second opening of the sleeve.

The disadvantage of this design, however, is that the operating range of the pipeline compensator is limited by the sleeve. To prevent soil material from entering the sleeve the size of the second opening of the sleeve needs to be matched closely to the nominal diameter of the pipe passing through the second opening of the sleeve. This limitation in size of the second opening restricts the possible movements of the pipe passing through the second opening mainly to sliding in and out of the second opening along the direction the pipe passes through the second opening. It is thus for example not possible for the pipe to move in lateral directions of the second opening, and only possible in a very small range to alter the inclination of the pipe with respect to said direction.

### Disclosure of the invention

It is an aim of the present invention to provide a housing for a pipeline compensator which increases the movement range of a pipe connected to a pipeline compensator arranged inside the housing.

This aim is achieved according to the invention with a housing for a pipeline compensator, also known as expansion joint, showing the technical characteristics of the characterising part of the first claim.

Therefore, the invention provides a housing for enclosing a pipeline compensator connected to pipes according to the technical features of claim 1.

The housing of the present invention has the advantage that it enables a larger movement range for at least the second pipe while the holding space and thus the housing is kept closed. If also the first opening is provided in a similar way as the second opening, but then regarding to a further element arranged in the first opening and selected from the first pipe and the first end of the pipeline compensator, then the housing of the present invention also enables a larger movement range for the first pipe while the holding space and thus the housing is kept closed.

The larger movement range of the second pipe is made possible by the second opening being significantly larger than a predetermined nominal diameter of the element arranged in the second opening. With its size the second opening provides a considerable amount of space in which the element arranged in the second opening can move freely. This enables the element arranged in the second opening for example to move in lateral directions of the second opening, to change its inclination in the second opening, and to move in a direction in and out of the second opening. The covering means which is moveably mounted in the second opening and thereby closely surrounding the element arranged in the second opening, then ensures that the holding space is kept closed while the element arranged in the second opening is moving within the second opening.

Thus, in contrast to housings for pipeline compensators known from the state of the art the size of the second opening does not need to be limited to the nominal diameter of a pipe passing through the second opening in order to prevent material, such as for example soil material, from entering the holding space and thus the housing. The housing of the present invention is thus very suitable for protecting a pipeline compensator connecting pipes of an underground pipeline system, while still allowing a large movement range of the pipes connected to the pipeline compensator.

As indicated above, the element arranged in the second opening may be the second pipe, meaning for example the tube shaped body of the pipe, a flange at the end of the pipe, or a dedicated part of the pipe arranged for moving within the second opening while being closely surrounded by the covering means. The element arranged in the second opening may also be the second end of the pipeline compensator, meaning for example a pipe connecting element, such as a flange, at the end of the pipeline compensator, or a dedicated part of the pipeline compensator arranged for moving within the second opening while being closely surrounded by the covering means.

In an embodiment of the housing according to the present invention the second opening is dimensioned to limit the movement of the element arranged in the second opening to a predetermined movement range, the predetermined movement range preferably being determined by an operating range of the pipeline compensator.

Dimensioning the second opening to limit the movement of the element arranged in the second opening to a predetermined movement range is a simple and beneficial way to adapt the housing in such a way that the pipeline compensator is prevented from being operated beyond its operating range by the movements within the second opening of the element arranged in the second opening.

In an embodiment of the housing according to the present invention the covering means is provided with a cover opening for closely surrounding the element arranged in the second opening.

The inventor has found the covering means with the cover opening to be a simple and uncomplicated means for providing the covering means of the housing according to the present invention for closely surrounding the element arranged in the second opening. It provides in a simplified design of the housing.

In an embodiment of the housing according to the present invention the cover opening is dimensioned for closely surrounding the element arranged in the second opening with a predetermined amount of play.

The cover opening being dimensioned for closely surrounding the element arranged in the second opening with a predetermined amount of play has two main advantages. A first advantage is that the cover opening is kept small to prevent material, such as for example soil material, from entering the holding space of the housing through the cover opening. A second advantage is that the cover opening is sufficiently large to prevent the element arranged in the second opening, from being pushed against the sides of the cover opening in some of the possible orientations of said element within the cover opening, thereby possibly causing damage to said element and/or the covering means.

For example, for an element arranged in the second opening which only passes straight through the cover opening, the size of the cover opening should only be a little bit larger than the size of said element for the cover opening to closely surround the element arranged in the second opening. However, if the element arranged in the second opening has different inclinations with respect to the cover opening in its different possible orientations, then the size of the cover opening needs to be larger to prevent said element from being pushed against the sides of the cover opening.

The possible orientations of the element arranged in the second opening is usually determined by the operating range of the pipeline compensator, since any orientation of said element which moves the pipeline compensator outside of its operating range could cause damage to the pipeline compensator.

The predetermined amount of play is to be determined based on the operating range of the pipeline compensator which is arranged inside the housing, the dimensions of the housing and where the pipeline compensator will be arranged inside the housing.

In an embodiment of the housing according to the present invention the covering means comprises a first part and a second part which are attached to each other, and wherein the cover opening is provided through both the first part and the second part.

The covering means comprising a first part and a second part, and both parts comprising a part of the cover opening, is advantageous for assembling the covering means around the element arranged in the second opening. Hereby, the first part can for example be positioned at one side of the element arranged in the second opening and the second part at another side of the element arranged in the second opening, after which both parts are attached against each other to form the covering means.

If both parts are attached to each other in a detachable manner, then the construction of the coverings means also has the advantage that the covering means are easily removed from around the element arranged in the second opening, for example for maintenance or replacement of the covering means.

The cover opening being provided through both the first part and the second part should be understood as the first part comprising a first portion of the cover opening and the second part comprising a second portion of the cover opening. Whereby the first portion of the cover opening and the second portion of the cover opening together form the cover opening when the first part and the second part are attached to each other.

In an embodiment of the housing according to the present invention the covering means comprises a first layer formed by the first part and the second part of the covering means and a second layer formed by a third part and a fourth part of the covering means, wherein the cover opening is also provided through both the third part and the fourth part, and wherein both of the third part and the fourth part are attached to both of the first part and the second part.

The double-layered covering means offers the advantage of additional strength and rigidity such that the covering means is able to withstand large forces, for example caused by the weight of a material, such as for example a soil material, covering the housing.

The cover opening also being provided through both the third part and the fourth part of the covering means, offers the same advantage of an easy assembly of the covering means as discussed above with respect to the cover opening being provided through both the first part and the second part of the covering means. Hereby, the first part can for example be positioned at one side of the element arranged in the second opening and the second part at another side of the element arranged in the second opening, and similar for the third part and the fourth part, after which the first part and the second part are attached against the third part and the fourth part to form the covering means.

Attaching both the third part and the fourth part of the covering means against both the first part and the second part of the covering means, is a beneficial way of strongly connecting the parts of the covering means with each other. The third part being attached against both the first part and the second part also attaches the first part and the second part to each other, and the fourth part also being attached against the first part and the second part further strengthens the connection between the first part and the second part. In this way, the first part and the second part also strongly connect the third part and the fourth part with each other.

In an embodiment of the housing according to the present invention the first part, the second part, if present the third part and if present the fourth part are attached to each other in a detachable manner.

The different parts of the covering means being attached to each other in a detachable manner is advantageous for disassembling the covering means, for example for maintenance or replacement of the covering means.

According to the invention, the housing comprises a cover chamber in which the covering means is moveably arranged, and wherein the second opening is provided through the cover chamber.

The cover chamber in which the covering means is moveably arranged and through which the second opening is provided, is a simple means of moveable mounting the covering means in the second opening.

Hereby, the covering means can easily be provided for keeping the holding space substantially closed by dimensioning the covering means larger than the second opening, which also prevents in an easy way the covering means from accidently being removed from the second opening.

Hereby, the housing can also easily be provided in such a way that the covering means is moveable along at least one lateral dimension of the second opening by dimensioning the cover chamber with respect to the covering means for this purpose.

In an embodiment of the housing according to the present invention the housing comprises a first housing part and a second housing part which are attached to each other, preferably in a detachable manner.

The housing comprising a first housing part and a second housing part which are provided for being attached to each other, is advantageous for introducing the pipeline compensator inside the holding space of the housing while assembling the housing. This only requires the pipeline compensator to be arranged in the first housing part, after which the housing is closed off by attaching the second housing part against the first housing part.

The housing parts being attached to each other in a detachable manner is advantageous for disassembling the housing, for example for maintenance or replacement of the housing, or for maintenance of replacement of the pipeline compensator.

In an embodiment of the housing according to the present invention the first opening is provided through both a wall of the first housing part and a wall of the second housing part, and the second opening is provided through both a wall of the first housing part and a wall of the second housing part.

The first opening and the second opening being provided through both a wall of the first housing part and a wall of the second housing part, offers the advantage that the housing can be assembled quickly and easily around the pipeline compensator, the element which is to be arranged in the second opening of the housing, and if necessary the further element which is to be arranged in the first opening of the housing. This only requires the pipeline compensator to be arranged in the first housing part, with the element which is to be arranged in the second opening arranged in the portion of the second opening provided through a wall of the first housing part, and if necessary with the further element which is to be arranged in the first opening arranged in the portion of the first opening provided through a wall of the first housing part, after which the housing is closed off by attaching the second housing part against the first housing part.

The first opening and the second opening being provided through both a wall of the first housing part and a wall of the second housing part should be understood as the first housing part respectively comprising a first portion of the first opening and a first portion of the second opening, and the second housing part respectively comprising a second portion of the first opening and a second portion of the second opening. Whereby the first portion of the first opening and the second portion of the first opening together form the first opening, and whereby the first portion of the second opening and the second portion of the second opening form the second opening when the first housing part and the second housing part are attached to each other.

The housing and the covering means may comprise a material selected from the list consisting of plastic, metal, steel, stainless steel, stainless steel type 304 and stainless steel type 316, preferably stainless steel, and more preferably stainless steel type 304 or stainless steel type 316.

The inventors have found steel, and more specifically stainless steel, to be a beneficial material to provide the housing and the covering means with both the strength to carry the weight of a material, such as for example a soil material, which covers the housing, and with the rigidity to withstand deformation caused by the weight of such a covering material. This makes the housing according to an embodiment of the present invention very suitable for underground use.

Stainless steel offers the further advantage of being corrosion resistant, such that the strength and the rigidity of the housing is maintained during the use of the housing and the covering means, and does not deteriorate because of corrosion.

In an embodiment of the housing according to the present invention the first opening is provided similar to the second opening of the housing according to an embodiment of the present invention, but then regarding to a further element arranged in the first opening and selected from the first pipe and the first end of the pipeline compensator instead of the element arranged in the second opening.

In this embodiment of the housing according to the present invention, the first opening is thus at least significantly larger than a predetermined nominal diameter of a further element arranged in the first opening and selected from the first pipe and the first end of the pipeline compensator, and provided with a covering means for closely surrounding the further element arranged in the first opening, which covering means is moveably mounted in the first opening in such a way as to be moveable along at least one lateral dimension of the first opening while the holding space is kept substantially closed. Thus, this embodiment of the housing according to the present invention offers the advantage that both the first opening and the second opening are enlarged to provide a larger movement range to the element arranged in the second opening and the further element arranged in the first opening, while still being closed off by the covering means which is moveably mounted in each of the openings.

Further, the first opening and the covering means of the first opening may be provided such as the second opening and the covering means of the second opening of the embodiments of the housing according to the present invention discussed above, and thereby benefit from the same advantages. Thus, for example, the first opening may be dimensioned to limit the movement of the further element arranged in the first opening to a predetermined movement range, the covering means of the first opening may be provided with a cover opening for closely surrounding the further element arranged in the first opening, etc.

In an embodiment of the housing according to the present invention the first opening is dimensioned such that the holding space is substantially closed when the first pipe is connected to the first end of the pipeline compensator via the first opening, preferably the position of the first end of the pipeline compensator being fixed with respect to the first opening.

The housing according to this embodiment is thus preferably used for arranging the pipeline compensator in the holding space in such a way that the position of the first end of the pipeline compensator is fixed with respect to the housing, more specifically fixed at least with respect to the first opening of the housing. This may for example be done by attaching the pipeline compensator with its first end against the housing, by attaching the first end of the pipeline compensator to the first pipe arranged at the outside of the housing in such a way that the wall of the housing surrounding the first opening is clamped tightly between the first end of the pipeline compensator and the first pipe, or by providing means inside the holding space for fixing the position of the first end of the pipeline compensator. In the latter case the first pipe is then inserted through the first opening into the holding space of the housing and connected there with the first end of the pipeline compensator.

If the position of the first end of the pipeline compensator is fixed with respect to the housing, then there is no need to make the first opening larger to provide moving space for the further element arranged in the first opening. In this case it is thus beneficial to dimension the first opening for substantially closing the holding space when the first pipe is connected to the first end of the pipeline compensator via the first opening, which prevents material, such as for example soil material, from entering the holding space through the first opening. If, for example, the first end of the pipeline compensator or the first pipe is arranged in the first opening, then the size of the first opening is preferably matched to the size of respectively the first end of the pipeline compensator or the first pipe. Or, if, for example, the first end of the pipeline compensator and the first pipe are connected with each other with the pipeline compensator arranged inside the holding space and the first pipe arranged outside of the housing, then the size of the first opening is preferably matched to the inner diameter of the pipeline compensator and the first pipe.

By fixing the position of the first end of the pipeline compensator with respect to the first opening of the housing the degrees of freedom for moving the pipeline compensator with respect to the housing is reduced. This has the advantage that the design of the housing can be simplified, because the possible positions the pipeline compensator may adopt within the housing is limited by fixing the first end of the pipeline compensator.

The invention further provides an assembly of a housing according to an embodiment of the present invention and a pipeline compensator, wherein at least a flexible part of the pipeline compensator is mounted inside the holding space of the housing.

In an embodiment of the assembly according to the present invention a first pipe is connected to a first end of the pipeline compensator via the first opening of the housing, and a second pipe is connected to a second end of the pipeline compensator via the second opening of the housing.

A pipeline system may comprise at least one assembly according to an embodiment of the present invention.

It should be clear to the person skilled in the art that the assembly of the present invention benefit from the same advantages as discussed above with respect to the housing of the present invention and its embodiments.

The invention further provides a method for manufacturing the housing according to an embodiment of the present invention, the method comprising the steps of:
- providing plates, preferably stainless steel plates, to form the different parts of the housing,
- shaping the plates to a predetermined shape of the different parts of the housing,
- assembling the shaped plates together to form the different parts of the housing, and
- assembling the different parts of the housing together to form the housing.

### Brief description of the drawings

The invention will be further elucidated by means of the following description and the appended figures.
Figure 1 shows a perspective and cutaway view on a housing according to a first embodiment of the present invention, looking at the side of the housing comprising the first opening.
Figure 2 shows a perspective and cutaway view on the housing of Figure 1, looking at the side of the housing comprising the second opening.
Figure 3 shows a side view into the opened cover chamber of the housing of Figure 1.
Figure 4 shows a first part and a third part of the covering means of the housing of Figure 1.
Figure 5 shows a perspective view on a housing according to a second embodiment of the present invention, looking at the side of the housing comprising the first opening.
Figure 6 shows a perspective view on a housing according to a second embodiment of the present invention, looking at the side of the housing comprising the second opening.
Figure 7 shows an example of a pipeline compensator.
Figure 8 shows an example of a pipe.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Within the context of the present invention, the term "pipeline compensator", also known as "expansion joint", is meant as being a flexible joint for connecting two pipes in a pipeline system. The term "pipeline compensator" or "expansion joint" is thus not limited to the device described previously with respect to the background art, but may for example also be two or more of such devices connected in series, possibly connected themselves by intermediate pipes.

Within the context of the present invention, the term "operating range" or "working range" of a pipeline compensator is meant as being the range in which pipes connected to the pipeline compensator may move with respect to each other without causing damage to the pipeline compensator. Said otherwise, the range within which the ends of the pipeline compensator may be positioned with respect to each other without destroying or permanently deforming the flexible part of the pipeline compensator.

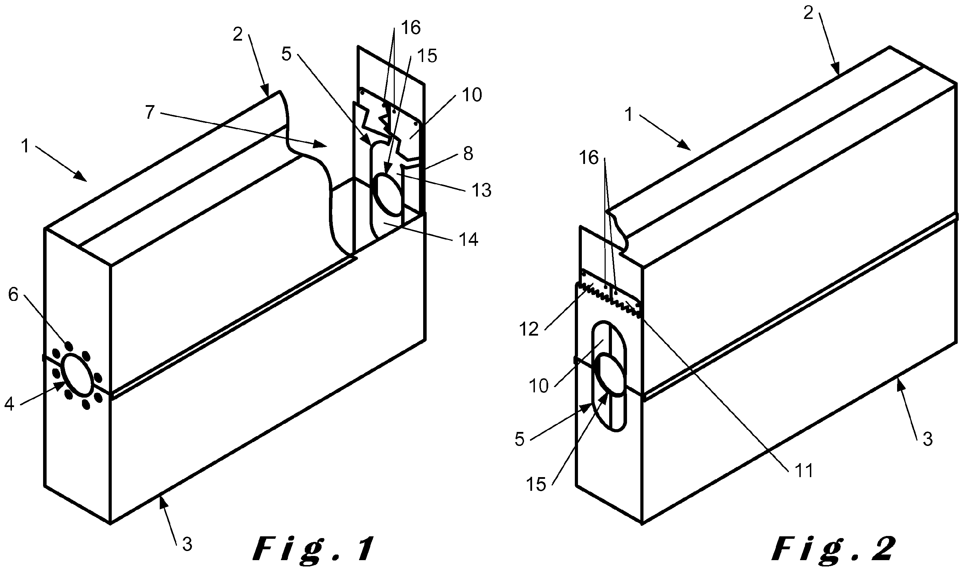

Figures 1 and 2 show a housing 1 according to a first embodiment of the present invention. Figure 1 shows a perspective view on the housing 1 at the side of the housing 1 comprising the first opening 4 of the housing 1. In this figure a part of the housing 1 is cut away to show the holding space 7 of the housing and the second opening 5 of the housing 1 from the inside of the housing 1. Figure 2 shows a perspective view on the housing 1 at the side of the housing 1 comprising the second opening 5 of the housing 1. Here again, a part of the housing 1 is cut away, now to show the cover chamber 9 in which the covering means 10, in the form of a cover plate 10, is moveably arranged.

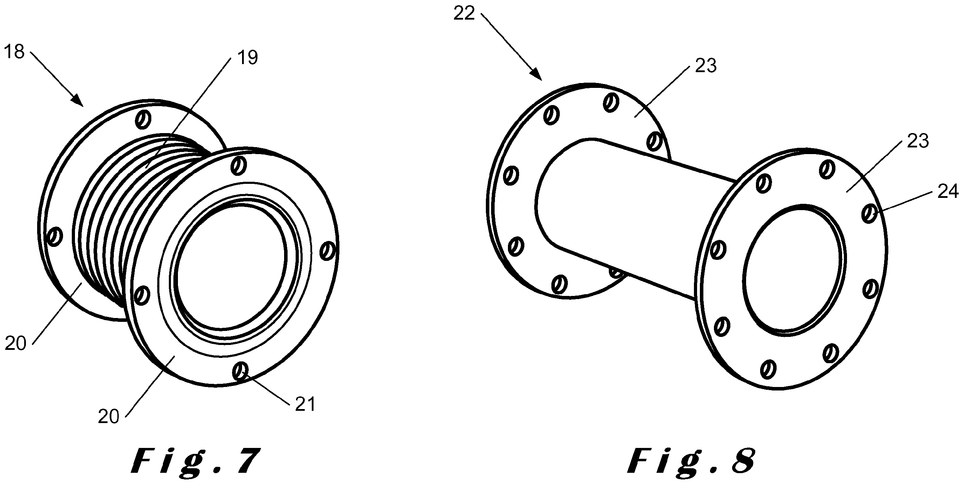

For illustrative purposes, examples of a pipeline compensator 18 and a pipe 22, which can be used in combination with the housing 1 according to an embodiment of the present invention, are respectively shown in Figures 7 and 8. The pipeline compensator 18 comprises a flexible part 19, which is formed by a metal bellows 19. The first end 20 and the second end 20 of the pipeline compensator 18 are here formed by at least the end flanges 20 of the pipeline compensator 18. These flanges 20 are provided with screw openings 21 via which the pipeline compensator 18 can be connected by means of screws or bolts to other components, such as for example a housing 1 according to an embodiment of the present invention, another pipeline compensator 18, pipes 22, etc. The screw opening 21 can be threaded such that a screw or bolt can be fixed in the screw opening 21 itself, or can be unthreaded, in which case a nut needs to be used to secure the bolt or screw in the screw opening 21. The pipe 22 comprises a tube shaped hollow body which is provided at both of its ends with flanges 23 which are also provided with screw openings 24. Hereafter, the housing 1 according to the present invention will be described with respect to these examples of the pipeline compensator 18 and the pipe 22, but it should be clear that the use of the housing 1 according to the present is not limited to such types of pipeline compensators 18 and pipes 22. It should also be clear that there are other suitable ways for connecting the pipeline compensator or the pipe to other components, such as for example by welding them together, by connecting them together with mechanical connection means such as clamps, etc.

The housing 1 has a first opening 4 via which a first pipe 22 is connectable to the first end 20 of a pipeline compensator 18. Hereby, the pipeline compensator 18 could be arranged inside the holding space 7 of the housing 1, with the flange 20 at the first end 20 of the pipeline compensator 18 attached against the housing 1. This can be done by means of screws which are screwed through the screw openings 21 of the flange 20 at the first end 20 of the pipeline compensator 18 and through screw openings 6 surrounding the first opening 4. In this way, the position of the first end 20 of the pipeline compensator 18 is fixed with respect to the housing 1, and more specifically fixed at least with respect to the first opening 4 of the housing 1. The first pipe 22 is then connected with one of its end flanges 23 against the outside of the housing 1 at the first opening 4. This can be done by screwing the screws which attach the flange 20 at the first end 20 of the pipeline compensator18 against the housing 1, also through screw openings 24 of the end flange 23 of the pipe 22. Here, the first opening 4 preferably has approximately the same size as the inner diameter of the first pipe 22 and the pipeline compensator 18, such that the holding space 7 is substantially closed off at the first opening 4, and such that the flow of a fluid flowing through the first pipe 22 and the pipeline compensator 18 is not hindered by the sides of the first opening 4.

It should be noted that it is also possible to position the flange 23 of the first pipe 22 inside the holding space 7 the housing 1, and attach it there to the flange 20 at the first end 20 of the pipeline compensator 18 and against the housing 1, but then from the inside of the housing 1. In this configuration, the first opening 4 preferably has approximately the same size as the size, or outer diameter, of the pipe body passing through the first opening 4, such that the holding space 7 is substantially closed off at the first opening 4.

Another possibility is to position the flange 20 at the first end 20 of the pipeline compensator 18 outside of the housing 1, and attach it there to the flange 23 of the first pipe 22 and against the housing 1, but then from the outside of the housing 1. In this configuration, the first opening 4 preferably has approximately the same size as the first end 20 of the pipeline compensator 18 passing through the first opening 4, such that the holding space 7 is substantially closed off at the side of the first opening 4.

The housing 1 also has a second opening 5 via which a second pipe 22 is connectable to the second end 20 of the pipeline compensator 18 arranged inside the holding space 7 of the housing 1. Hereby the second pipe 22 may be arranged with its tube shaped hollow body through the second opening 5. Inside the holding space 7 the second end 20 of the pipeline compensator 18 is then connected to the second pipe 22, by means of screws which are screwed through both the screw openings 21 of the flange 20 at the second end 20 of the pipeline compensator 18 and through screw openings 24 of the flange 23 at the end of the second pipe 22 arranged inside the housing 1.

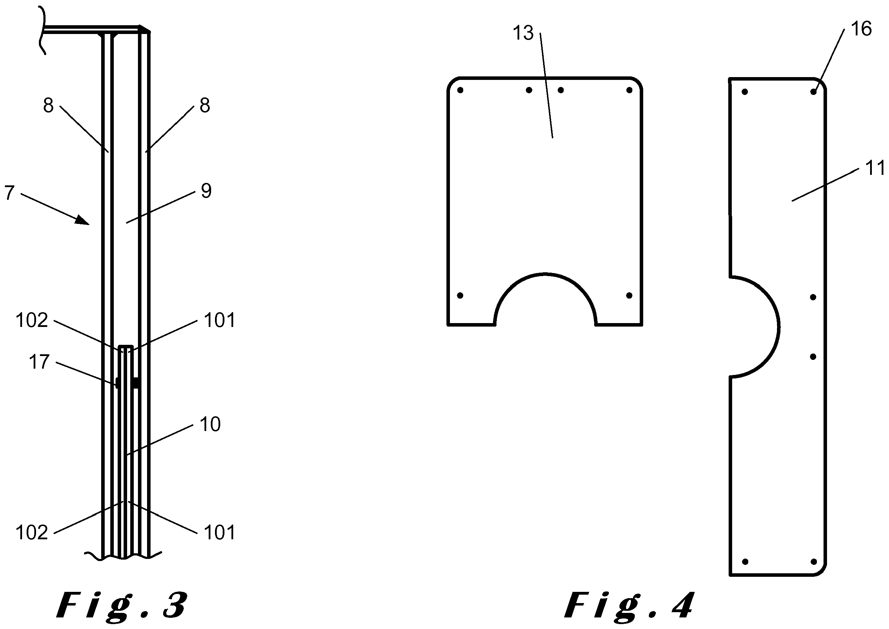

The size of the second opening 5 is larger than the size or diameter of the second pipe 22, or more specifically of the tube shaped hollow body of the second pipe 22. In this way the second pipe 22 is able to move freely within a predetermined movement range provided by the second opening 5. However, to keep the holding space 7 substantially closed off from the environment, the second opening 5 of the housing is provided with a covering means 10 in the form of a cover plate 10. The cover plate 10 is provided with a cover opening 15 for closely surrounding the hollow tube shaped body of the second pipe 22. Hereby, the size of the cover opening 15 preferably has substantially the same size as the size or diameter of the tube shaped hollow body of the second pipe 22, optionally with a predetermined amount of play. In this embodiment, as can be seen in more detail in Figure 3, the covering means 10 is moveably arranged inside a cover chamber 9, which is formed between a double wall 8 of the housing 1, and wherein the second opening 5 of the housing 1 passes through both walls 8 of this double wall 8. In this way the cover plate 10 is moveably mounted in the second opening 5. Thus, with the cover plate 10 closely surrounding the second pipe 22 and the cover plate 10 being moveably arranged in the cover chamber 9, the cover plate 10 is able to follow any movement of the second pipe 22 in any lateral dimension of the second opening 5 and in and out of the second opening 5, while still substantially closing off the holding space 7 of the housing 1 from the side of the housing 1 comprising the second opening 5.

It should be noted that it is also possible to arrange the end of the second pipe 22, which is in the example formed by a flange 23, through the second opening 5 of the housing 1, and thereby also through the cover opening 15 of the cover plate 10. Here, it is preferable that the end of the second pipe 22 is adapted to be arranged in the cover opening 15, for example by making it sufficiently long that it may slide through the cover opening 15 in the direction in and out of the cover opening 15. When the end of the second pipe 22 is arranged in the second opening 5 instead of the hollow tube shaped body of the second pipe 22, then the size of the second opening 5 and the cover opening 15 is determined with respect to the end of the pipe 22 that is arranged in the second opening 5, and thus not with respect to the hollow tube shaped body of the second pipe 22 as described above.

Another possibility is to arrange the second end 20 of the pipeline compensator 18 through the second opening 5 of the housing and the cover opening 15 of the cover plate 10. Whereby the second end 20 of the pipeline compensator 18 is preferably adapted to be arranged in the cover opening 15, for example by making it sufficiently long such that it may slide through the cover opening 15 in the direction in and out of the cover opening 15. Here, the size of the second opening 5 and the cover opening 15 is determined with respect to the second end 20 of the pipeline compensator 18 that is arranged in the second opening 5.

In this embodiment of the housing 1, the cover plate 10 is moveably mounted in the second opening 5 in such a way that the cover plate 10 is moveable along the height direction of the second opening 5. This is achieved by the width of the cover chamber 9 being substantially the same as the width of the cover plate 10, such that the cover plate 10 may only move very little in the width direction of the cover chamber 9, and by the height of the cover chamber 9 being significantly larger than the length of the cover plate 10, such that the cover plate 10 has room for moving in the cover chamber 9 in the height direction.

In this embodiment also the second opening 5 itself is shaped in such a way that an element 22, 20, selected from the second pipe 22 and the second end 20 of the pipeline compensator 18, which is arranged through the second opening 5, is only moveable along the height direction of the second opening 5. Therefore, the width of the second opening 5 is substantially the same as the size or diameter of the element 20, 22 arranged in the second opening 5, such that said element 20, 22 may only move very little in the width direction of the second opening 5, and the length of the second opening 5 is significantly larger than the size or diameter of the element 20, 22 arranged in the second opening 5, such that said element 20, 22 has room for moving within the second opening 5 in the height direction.

The cover plate 10 may also be moveably mounted in the second opening 5 in such a way that the cover plate 10 is moveable along other lateral dimensions of the second opening 5. This may in the embodiment of Figures 1 and 2, for example, be done by making also the width of the cover chamber 9 significantly larger than the width of the cover plate 10, and by making the width of the second opening 5 also significantly larger than the width of the element 20, 22 arranged in the second opening 5.

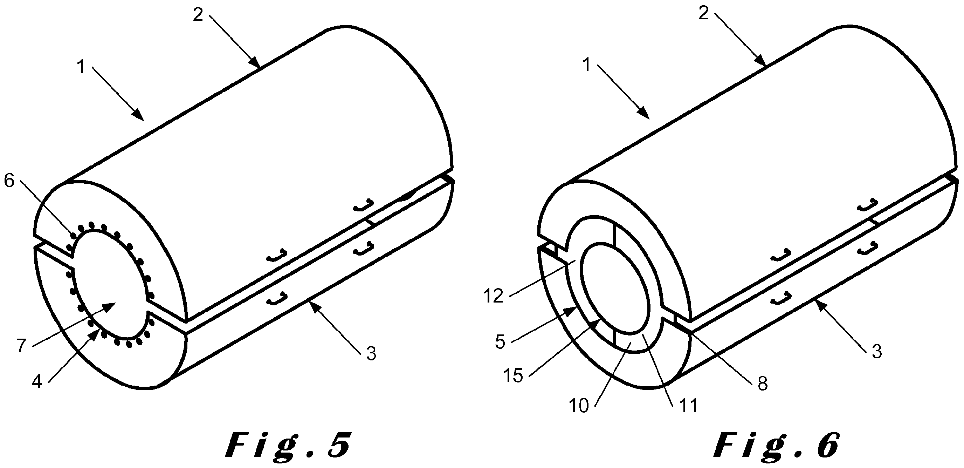

Another example of a housing 1 provided such that the covering means 10 is moveable along any lateral dimension of the second opening 5 is for example shown in Figures 5 and 6. The housing 1 according to this embodiment of the present invention is constructed similarly to the housing 1 of the embodiment of Figures 1 and 2, but the housing 1 is cylindrically shaped instead of beam shaped, and the cover chamber 9 and the cover plate 10 have a circular shape instead of a rectangular shape. Here, the cover chamber 9 has a diameter which is significantly larger than the diameter of the cover plate 10, such that the cover plate 10 has room for moving within the second cover chamber 9 in any lateral dimension of the second opening 5. Also the second opening 5 has a diameter which is significantly larger than the diameter of the element 22, 20 arranged in the second opening, such that said element 22, 20 has room for moving within the second opening 5 in any lateral dimension of the second opening 5.

It should be noted that it is also possible to provide the first opening 4 of the housing 1 in a similar way as the second opening 5 of the housing 1. Thus, the first opening 4 having at least a size which is significantly larger than a nominal diameter of a first pipe 22 or the first end 20 of a pipeline compensator 18 arranged in the first opening, and provided with a covering means 10 which is moveably mounted in the first opening 4.

The cover plate 10 in the second opening 5 of the housing 1 of Figures 1 and 2 and shown in more detail in Figure 3, is composed of a first part 11 and a second part 12, which form a first layer 101 of the cover plate 10, and a third part 13 and a fourth part 14, which form a second layer 102 of the cover plate 10. The cover opening 15 of the cover plate 10 goes through the first layer 101 of the cover plate 10, whereby the cover opening 15 is partially provided through the first part 11 of the cover plate 10 and partially through the second part 12 of the cover plate 10. The cover opening 15 of the cover plate 10 also goes through the second layer 102 of the cover plate 10, whereby the cover opening 15 is partially provided through the third part 13 of the cover plate 10 and partially through the fourth part 14 of the cover plate 10.

Figure 4 shows the first part 11 and the third part 13 of the cover plate 10. The second part 12 and the fourth part 14 of the cover plate 10 are not shown in Figure 4, but the second part 12 of the cover plate 10 has the same shape as the first part 11 of the cover plate 10, and the fourth part 14 of the cover plate 10 has the same shape as the third part 13 of the cover plate 10. The first part 11 of the cover plate 10 comprises a first portion of the cover opening 15 going through the first layer 101 of the cover plate 10 and the second part 12 of the cover plate 10 comprises a second portion of the cover opening 15 going through the first layer 101 of the cover plate 10. To assemble the cover plate 10 the first part 11 and the second part 12 of the cover plate 10 are positioned against each other such that the first portion and the second portion together form the cover opening 15 going through the first layer 101 of the cover plate 10. The first part 11 and the second part 12 are then attached to each other by attaching the third part 13 of the cover plate 10 against both the first part 11 and the second part 12 of the cover plate 10 by means of screws 17 through the screw holes 16 provided in the four different parts 11, 12, 13, 14 of the cover plate 10. The fourth part 14 of the cover plate 10 is also attached in this way against the first part 11 and the second part 12 of the cover plate 10. Thereby, the fourth part 14 of the cover plate 10 is positioned against the third part 13 of the cover plate 10 such that a first portion of the cover opening 15 going through the third part 13 of the cover plate 10 and a second portion of the cover opening 15 going through the fourth part 14 of the cover plate 10, together form the cover opening 15 going through the second layer 102 of the cover plate 10. It should be clear that different parts 11, 12, 13, 14 of the cover plate 10 can also be connected to each other in different ways, such as for example by welding, by gluing, by other mechanical means such as clamps, etc.

The portions of the cover opening 15 going through the different parts 11, 12, 13, 14 of the cover plate 10 are shaped such that the cover plate 10 is easily assembled and/or disassembled around the element 22, 20, selected from the second pipe 22 and the second end 20 of the pipeline compensator 18, which is to be arranged in the second opening 5, or in case the cover plate 10 is also provided in the first opening 4, around the further element 22, 20, selected from the first pipe 22 and the first end 20 of the pipeline compensator 18, which is to be arranged in the first opening 4.

Figures 1, 2, 5 and 6 show how the housing 1 according to an embodiment of the present invention is composed of a first housing part 2 and a second housing part 3, which are provided to be attached against each other.

In these embodiments, the first opening 4 of the housing 1 goes partially through the first housing part 2 and partially through the second housing part 3. Thus, a wall or wall part of the first housing part 2 comprises a first portion of the first opening 4, and a wall or wall part of the second housing part 3 comprises a second portion of the first opening 4, whereby the first portion and the second portion together form the first opening 4 of the housing 1 when the housing parts 2, 3 are attached to each other. The portions of the first opening 4 in both the housing parts 2, 3 are shaped such that the housing 1 is easily assembled and/or disassembled around the element 22, 20, selected from the first pipe 22 and the first end 20 of the pipeline compensator 18, which is to be arranged in the first opening 4.

The second opening 5 is provided in a similar way through both housing parts 2, 3.

### List of reference numbers:

- 1: housing
- 2: first housing part
- 3: second housing part
- 4: first opening
- 5: second opening
- 6: screw opening housing
- 7: holding space
- 8: double wall
- 9: cover chamber
- 10: cover plate (covering means)
- 101: first layer cover plate
- 102: second layer cover plate
- 11: first part of the cover plate
- 12: second part of the cover plate
- 13: third part of the cover plate
- 14: fourth part of the cover plate
- 15: cover opening
- 16: screw opening cover plate
- 17: screw
- 18: pipeline compensator
- 19: flexible part of the pipeline compensator
- 20: pipeline compensator flange
- 21: screw opening pipeline compensator flange
- 22: pipe
- 23: pipe flange
- 24: screw opening pipe flange

## Claims

1. A housing (1) for enclosing and protecting a pipeline compensator (18) connecting a first (22) and a second (22) pipe of an underground pipeline system, wherein the pipes (22) have a predetermined nominal diameter, the housing (1) enclosing a holding space (7) for holding at least a flexible part (19) of the pipeline compensator (18) therein, the housing (1) having a first opening (4) via which the first pipe (22) is connectable to a first end (20) of the pipeline compensator (18) such that they are in fluid communication with each other and a second opening (5) via which the second pipe (22) is connectable to a second end (20) of the pipeline compensator (18) such that they are in fluid communication with each other, wherein at least the second opening (5) is significantly larger than a predetermined nominal diameter of an element (22, 20) arranged, in use, in the second opening (5) and the element being selectable from the second pipe (22) and the second end (20) of the pipeline compensator (18), wherein at least the second opening (5) is provided with a covering means (10) for closely surrounding the element (22, 20) arranged, in use, in the second opening (5), the housing (1) being **characterised in that** the covering means (10) is moveably mounted in the second opening (5) in such a way as to be moveable along at least one lateral dimension of the second opening (5) while the housing (1) is kept substantially closed, and **in that** the housing (1) comprises a cover chamber (9) in which the covering means (10) is moveably arranged, wherein the second opening (5) is provided through the cover chamber (9).

2. The housing (1) according to claim 1, wherein the covering means (10) is moveably mounted in the second opening (5) in such a way as to be moveable along at least one lateral dimension of the second opening (5) while the holding space (7) is kept closed.

3. The housing (1) according to claim 1 or 2, wherein the second opening (5) is dimensioned to limit the movement of the element (22, 20) arranged, in use, in the second opening (5) to a predetermined movement range.

4. The housing (1) according to any one of the preceding claims 1-3, wherein the covering means (10) is provided with a cover opening (15) for closely surrounding the element (22, 20) arranged, in use, in the second opening (5).

5. The housing (1) according to claim 4, wherein the cover opening (15) is dimensioned for closely surrounding the element (22, 20) arranged, in use, in the second opening (5) with a predetermined amount of play.

6. The housing (1) according to claim 4 or 5, wherein the covering means (10) comprises a first part (11) and a second part (12) which are attached to each other, and wherein the cover opening (15) is provided through both the first part (11) and the second part (12).

7. The housing (1) according to claim 6, wherein the covering means (10) comprises a first layer formed by the first part (11) and the second part (12) of the covering means (10) and a second layer formed by a third part (13) and a fourth part (14) of the covering means (10), wherein the cover opening (15) is also provided through both the third part (13) and the fourth part (14), and wherein both of the third part (13) and the fourth part (14) are attached to both of the first part (11) and the second part (12).

8. The housing (1) according to claim 6 or 7, wherein the first part (11), the second part (12), if present the third part (13) and if present the fourth part (14) are attached to each other in a detachable manner.

9. The housing (1) according to any one of the claims 1-8, wherein the housing (1) comprises a first housing part (2) and a second housing part (3) which are attached to each other.

10. The housing (1) according to claim 9, wherein the first opening (4) is provided through both a wall of the first housing part (2) and a wall of the second housing part (3), and wherein the second opening (5) is provided through both a wall (8) of the first housing part (2) and a wall (8) of the second housing part (3).

11. The housing (1) according to any one of the claims 1-10, wherein the first opening (4) is provided similar to the second opening (5) of the housing (1), but then regarding to a further element (22, 20) arranged, in use, in the first opening (4) and selected from the first pipe (22) and the first end (20) of the pipeline compensator (18) instead of the element (22, 20) arranged, in use, in the second opening (5).

12. The housing (1) according to any one of the claims 1-10, wherein the first opening (4) is dimensioned such that the housing (1) is substantially closed when the first pipe (22) is connected to the first end (20) of the pipeline compensator (18) via the first opening (4), preferably the position of the first end (20) of the pipeline compensator (18) being fixed with respect to the first opening (4).

13. The housing according to claim 12, wherein the first opening (4) is dimensioned such that the holding space (7) is substantially closed when the first pipe (22) is connected to the first end (20) of the pipeline compensator (18) via the first opening (4).

14. An assembly of a housing (1) according to any one of the claims 1-13 and a pipeline compensator (18), wherein at least a flexible part (19) of the pipeline compensator (18) is mounted inside the holding space (7) of the housing (1), wherein a first pipe (22) is connected to a first end (20) of the pipeline compensator (18) via the first opening (4) of the housing (1), and wherein a second pipe (22) is connected to a second end (20) of the pipeline compensator (18) via the second opening (5) of the housing (1).

15. A method for manufacturing the housing (1) according to any one of the claims 1-13, the method comprising the steps of:
- providing plates, preferably stainless steel plates, to form the different parts of the housing (1),
- shaping the plates to a predetermined shape of the different parts of the housing (1),
- assembling the shaped plates together to form the different parts of the housing (1), and
- assembling the different parts of the housing (1) together to form the housing (1).

## Patentansprüche

1. Ein Gehäuse (1) zum Umschließen und Schützen eines Rohrleitungskompensators (18), welcher ein erstes (22) und ein zweites (22) Rohr eines unterirdischen Rohrleitungssystems verbindet, wobei die Rohre (22) einen vorbestimmten Nenndurchmesser haben, wobei das Gehäuse (1) einen Halteraum (7) zum Halten von zumindest einem flexiblen Teil (19) des Rohrleitungskompensators (18) darin umschließt, wobei das Gehäuse (1) eine erste Öffnung (4) hat, über die das erste Rohr (22) mit einem ersten Ende (20) des Rohrleitungskompensators (18) so verbindbar ist, dass sie in Fluidkommunikation miteinander sind, und eine zweite Öffnung (5), über die das zweite Rohr (22) mit einem zweiten Ende (20) des Rohrleitungskompensators (18) so verbindbar ist, dass sie in Fluidkommunikation miteinander sind, wobei zumindest die zweite Öffnung (5) wesentlich größer ist als ein vorbestimmter Nenndurchmesser eines Elements (22, 20), angeordnet, während der Verwendung, in der zweiten Öffnung (5), und wobei das Element aus dem zweiten Rohr (22) und dem zweiten Ende (20) des Rohrleitungskompensators (18) auswählbar ist, wobei zumindest die zweite Öffnung (5) mit einer Abdeckung (10) versehen ist, um das Element (22, 20) eng zu umgeben, welches, während der Verwendung, in der zweiten Öffnung (5) angeordnet ist, wobei das Gehäuse (1) **dadurch gekennzeichnet ist, dass** die Abdeckung (10) so beweglich in der zweiten Öffnung (5) montiert ist, dass sie beweglich entlang zumindest einer lateralen Dimension der zweiten Öffnung (5) ist, während das Gehäuse (1) im Wesentlichen geschlossen gehalten wird, und dadurch, dass das Gehäuse (1) eine Abdeckkammer (9) umfasst, in der die Abdeckung (10) beweglich angeordnet ist, wobei die zweite Öffnung (5) durch die Abdeckkammer (9) bereitgestellt ist.

2. Das Gehäuse (1) nach Anspruch 1, wobei die Abdeckung (10) so beweglich in der zweiten Öffnung (5) montiert ist, dass sie beweglich entlang zumindest einer lateralen Dimension der zweiten Öffnung (5) ist, während deren Halteraum (7) geschlossen gehalten bleibt.

3. Das Gehäuse (1) nach Anspruch 1 oder 2, wobei die zweite Öffnung (5) bemessen ist, um die Bewegung des Elements (22, 20), welches, während der Verwendung, in der zweiten Öffnung (5) angeordnet ist, auf einen vorbestimmten Bewegungsbereich zu begrenzen.

4. Das Gehäuse (1) nach irgendeinem der vorigen Ansprüche 1 bis 3, wobei die Abdeckung (10) mit einer Abdeckungsöffnung (15) versehen ist, um das Element (22, 20) eng zu umschließen, welches, während der Verwendung, in der zweiten Öffnung (5) angeordnet ist.

5. Das Gehäuse (1) nach Anspruch 4, wobei die Abdeckungsöffnung (15) bemessen ist, um das Element (22, 20) eng zu umschließen, welches, während der Verwendung, in der zweiten Öffnung (5) mit einem vorbestimmten Umfang an Spielraum angeordnet ist.

6. Das Gehäuse (1) nach Anspruch 4 oder 5, wobei die Abdeckung (10) ein erstes Teil (11) und ein zweites Teil (12) umfasst, welche aneinander befestigt sind, und wobei die Abdeckungsöffnung (15) durch sowohl das erste Teil (11) als auch das zweite Teil (12) bereitgestellt ist.

7. Das Gehäuse (1) nach Anspruch 6, wobei die Abdeckung (10) eine erste Schicht umfasst, geformt durch das erste Teil (11) und das zweite Teil (12) der Abdeckung (10), und eine zweite Schicht, geformt durch ein drittes Teil (13) und ein viertes Teil (14) der Abdeckung (10), wobei die Abdeckungsöffnung (15) auch durch sowohl das dritte Teil (13) als auch das vierte Teil (14) bereitgestellt ist, und wobei sowohl das dritte Teil (13) als auch das vierte Teil (14) an sowohl dem ersten Teil (11) als auch dem zweiten Teil (12) befestigt sind.

8. Das Gehäuse (1) nach Anspruch 6 oder 7, wobei das erste Teil (11), das zweite Teil (12), falls vorhanden das dritte Teil (13) und falls vorhanden das vierte Teil (14) auf eine abnehmbare Art aneinander befestigt sind.

9. Das Gehäuse (1) nach irgendeinem der Ansprüche 1 bis 8, wobei das Gehäuse (1) ein erstes Gehäuseteil (2) und ein zweites Gehäuseteil (3) umfasst, welche aneinander befestigt sind.

10. Das Gehäuse (1) nach Anspruch 9, wobei die erste Öffnung (4) durch sowohl eine Wand des ersten Gehäuseteils (2), als auch eine Wand des zweiten Gehäuseteils (3) bereitgestellt sind, und wobei die zweite Öffnung (5) durch sowohl eine Wand (8) des ersten Gehäuseteils (2) als auch eine Wand (8) des zweiten Gehäuseteils (3) bereitgestellt ist.

11. Das Gehäuse (1) nach irgendeinem der Ansprüche 1 bis 10, wobei die erste Öffnung (4) ähnlich der zweiten Öffnung (5) des Gehäuses (1) bereitgestellt ist, dann aber ausgerichtet auf ein weiteres Element (22, 20), angeordnet, während der Verwendung, in der ersten Öffnung (4) und ausgewählt aus dem ersten Rohr (22) und dem ersten Ende (20) des Rohrleitungskompensators (18) statt dem Element (22, 20, angeordnet, während der Verwendung, in der zweiten Öffnung (5).

12. Das Gehäuse (1) nach irgendeinem der Ansprüche 1 bis 10, wobei die erste Öffnung (4) so bemessen ist, dass das Gehäuse (1) im Wesentlichen geschlossen ist, wenn das erste Rohr (22) mit dem ersten Ende (20) des Rohrleitungskompensators (18) über die erste Öffnung (4) verbunden ist, wobei bevorzugt die Position des ersten Endes (20) des Rohrleitungskompensators (18) in Bezug zur ersten Öffnung (4) fixiert ist.

13. Das Gehäuse nach Anspruch 12, wobei die erste Öffnung (4) so bemessen ist, dass der Halteraum (7) im Wesentlichen geschlossen ist, wenn das erste Rohr (22) mit dem ersten Ende (20) des Rohrleitungskompensators (18) über die erste Öffnung (4) verbunden ist.

14. Eine Baugruppe bestehend aus einem Gehäuse (1) nach irgendeinem der Ansprüche 1 bis 13 und einem Rohrleitungskompensator (18), wobei zumindest ein flexibles Teil (19) des Rohrleitungskompensators (18) innerhalb des Halteraums (7) des Gehäuses (1) montiert ist, wobei ein erstes Rohr (22) mit einem ersten Ende (20) des Rohrleitungskompensators (18) über die erste Öffnung (4) des Gehäuses (1) verbunden ist, und wobei ein zweites Rohr (22) mit einem zweiten Ende (20) des Rohrleitungskompensators (18) über die zweite Öffnung (5) des Gehäuses (1) verbunden ist.

15. Ein Verfahren zur Herstellung des Gehäuses (1) nach irgendeinem der Ansprüche 1 bis 13, wobei das Verfahren folgende Schritte umfasst:
- Bereitstellen von Blechen, bevorzugt Edelstahlblechen, um die verschiedenen Teile des Gehäuses (1) zu bilden,
- Formen der Bleche in eine vorbestimmte Form der verschiedenen Teile des Gehäuses (1),
- Zusammenbauen der geformten Bleche miteinander, um die verschiedenen Teile des Gehäuses (1) zu formen, und
- Zusammenbauen der geformten Teile des Gehäuses (1) miteinander, um das Gehäuse (1) zu formen.

## Revendications

1. Boîtier (1) pour enfermer et protéger un compensateur de canalisation (18) raccordant un premier (22) et un second (22) tuyaux d'un système de canalisation souterrain, dans lequel les tuyaux (22) présentent un diamètre nominal prédéterminé, le boîtier (1) enfermant un espace de maintien (7) pour maintenir au moins une partie flexible (19) du compensateur de canalisation (18) dedans, le boîtier (1) présentant une première ouverture (4) via laquelle le premier tuyau (22) peut être raccordé à une première extrémité (20) du compensateur de canalisation (18) de sorte qu'ils soient en communication fluidique l'un avec l'autre et une seconde ouverture (5) via laquelle le second tuyau (22) peut être raccordé à une seconde extrémité (20) du compensateur de canalisation (18) de sorte qu'ils soient en communication fluidique l'un avec l'autre, dans lequel au moins la seconde ouverture (5) est significativement plus grande qu'un diamètre nominal prédéterminé d'un élément (22, 20) agencé, en utilisation, dans la seconde ouverture (5) et l'élément étant sélectionnable parmi le second tuyau (22) et la seconde extrémité (20) du compensateur de canalisation (18), dans lequel au moins la seconde ouverture (5) est prévue avec un moyen de couverture (10) pour entourer étroitement l'élément (22, 20) agencé, en utilisation, dans la seconde ouverture (5), le boîtier (1) étant **caractérisé en ce que** le moyen de couverture (10) est monté de manière mobile dans la seconde ouverture (5) de manière à être mobile le long d'au moins une dimension latérale de la seconde ouverture (5) alors que le boîtier (1) est maintenu sensiblement fermé, et **en ce que** le boîtier (1) comprend une chambre de couverture (9) dans laquelle le moyen de couverture (10) est agencé de manière mobile, dans lequel la seconde ouverture (5) est prévu au travers de la chambre de couverture (9).

2. Boîtier (1) selon la revendication 1, dans lequel le moyen de couverture (10) est monté de manière mobile dans la seconde ouverture (5) de manière à être mobile le long d'au moins une dimension latérale de la seconde ouverture (5) alors que l'espace de maintien (7) est maintenu fermé.

3. Boîtier (1) selon la revendication 1 ou 2, dans lequel la seconde ouverture (5) est dimensionnée pour limiter le mouvement de l'élément (22, 20) agencé, en utilisation, dans la seconde ouverture (5) dans une étendue de mouvement prédéterminée.

4. Boîtier (1) selon l'une quelconque des revendications 1 à 3, dans lequel le moyen de couverture (10) est prévu avec une ouverture de couverture (15) pour entourer étroitement l'élément (22, 20) agencé, en utilisation, dans la seconde ouverture (5).

5. Boîtier (1) selon la revendication 4, dans lequel l'ouverture de couverture (15) est dimensionnée pour entourer étroitement l'élément (22, 20) agencé, en utilisation, dans la seconde ouverture (5) avec une quantité de jeu prédéterminée.

6. Boîtier (1) selon la revendication 4 ou 5, dans lequel le moyen de couverture (10) comprend une première partie (11) et une deuxième partie (12) qui sont attachées l'une à l'autre et dans lequel l'ouverture de couverture (15) est prévue au travers à la fois de la première partie (11) et la deuxième partie (12).

7. Boîtier (1) selon la revendication 6, dans lequel le moyen de couverture (10) comprend une première couche formée par la première partie (11) et la deuxième partie (12) du moyen de couverture (10) et une seconde couche formée par une troisième partie (13) et une quatrième partie (14) du moyen de couverture (10), dans lequel l'ouverture de couverture (15) est aussi prévue au travers à la fois de la troisième partie (13) et la quatrième partie (14), et dans lequel à la fois la troisième partie (13) et la quatrième partie (14) sont attachées à la fois à la première partie (11) et la deuxième partie (12).

8. Boîtier (1) selon la revendication 6 ou 7, dans lequel la première partie (11), la deuxième partie (12), si présente la troisième partie (13) et si présente la quatrième partie (14) sont attachées les unes aux autres de manière détachable.

9. Boîtier (1) selon l'une quelconque des revendications 1 à 8, dans lequel le boîtier (1) comprend une première partie de boîtier (2) et une deuxième partie de boîtier (3) qui sont attachées l'une à l'autre.

10. Boîtier (1) selon la revendication 9, dans lequel la première ouverture (4) est prévue au travers à la fois d'une paroi de la première partie de boîtier (2) et une paroi de la deuxième partie de boîtier (3), et dans lequel la seconde ouverture (5) est prévue au travers à la fois d'une paroi (8) de la première partie de boîtier (2) et une paroi (8) de la deuxième partie de boîtier (3).

11. Boîtier (1) selon l'une quelconque des revendications 1 à 10, dans lequel la première ouverture (4) est prévue de manière similaire à la seconde ouverture (5) du boîtier (1) mais ensuite concernant un autre élément (22, 20) agencé, en utilisation, dans la première ouverture (4) et sélectionné parmi le premier tuyau (22) et la première extrémité (20) du compensateur de canalisation (18) à la place de l'élément (22, 20) agencé, en utilisation, dans la seconde ouverture (5).

12. Boîtier (1) selon l'une quelconque des revendications 1 à 10, dans lequel la première ouverture (4) est dimensionnée de sorte que le boîtier (1) soit sensiblement fermé lorsque le premier tuyau (22) est raccordé à la première extrémité (20) du compensateur de canalisation (18) via la première ouverture (4), de préférence la position de la première extrémité (20) du compensateur de canalisation (18) étant fixée par rapport à la première ouverture (4).

13. Boîtier (1) selon la revendication 12, dans lequel la première ouverture (4) est dimensionnée de sorte que l'espace de maintien (7) soit sensiblement fermé lorsque le premier tuyau (22) est raccordé à la première extrémité (20) du compensateur de canalisation (18) via la première ouverture (4).

14. Ensemble d'un boîtier (1) selon l'une quelconque des revendications 1 à 13 et un compensateur de canalisation (18), dans lequel au moins une partie flexible (19) du compensateur de canalisation (18) est montée à l'intérieur de l'espace de maintien (7) du boîtier (1), dans lequel un premier tuyau (22) est raccordé à une première extrémité (20) du compensateur de canalisation (18) via la première ouverture (4) du boîtier (1), et dans lequel un second tuyau (22) est raccordé à une seconde extrémité (20) du compensateur de canalisation (18) via la seconde ouverture (5) du boîtier (1).

15. Procédé de fabrication du boîtier (1) selon l'une quelconque des revendications 1 à 13, le procédé comprenant les étapes de :
- fourniture de plaques, de préférence de plaques en acier inoxydable pour former les différentes parties du boîtier (1),
- formation des plaques en une forme prédéterminée des différentes parties du boîtier (1),
- assemblage des plaques formées ensemble pour former les différentes parties du boîtier (1), et
- assemblage des différentes parties du boîtier (1) ensemble pour former le boîtier (1).
